(19) Europäisches Patentamt
European Patent Office
Office européen des brevets

(11) Veröffentlichungsnummer: **0 470 082 B1**

(12) **EUROPÄISCHE PATENTSCHRIFT**

(45) Veröffentlichungstag der Patentschrift: **15.06.94**

(51) Int. Cl.$^5$: **C03C 25/02**, C09D 175/14, C08L 75/14

(21) Anmeldenummer: **90905487.6**

(22) Anmeldetag: **03.04.90**

(86) Internationale Anmeldenummer:
**PCT/EP90/00520**

(87) Internationale Veröffentlichungsnummer:
**WO 90/13523 (15.11.90 90/26)**

# (54) FLÜSSIGE, STRAHLENHÄRTBARE ÜBERZUGSMASSE FÜR DIE BESCHICHTUNG VON GLASOBERFLÄCHEN.

(30) Priorität: **29.04.89 DE 3914411**

(43) Veröffentlichungstag der Anmeldung:
**12.02.92 Patentblatt 92/07**

(45) Bekanntmachung des Hinweises auf die Patenterteilung:
**15.06.94 Patentblatt 94/24**

(84) Benannte Vertragsstaaten:
**AT BE CH DE DK ES FR GB IT LI NL SE**

(56) Entgegenhaltungen:
**EP-A- 0 149 741**
**DE-B- 2 426 654**
**US-A- 4 472 019**
**EP-A- 0 307 102**
**US-A- 4 289 672**
**US-A- 4 745 028**

(73) Patentinhaber: **BASF Lacke + Farben AG**
**Glasuritstrasse 1**
**D-48165 Münster-Hiltrup(DE)**

Patentinhaber: **HINTZE-BRUNING, Horst, Dr.**
**Rolevinckweg 15**
**D-48165 Münster(DE)**

(72) Erfinder: **SCHUNCK, Stephan**
**Gleuelerstrasse 123**
**D-5000 Köln 41(DE)**
Erfinder: **HINTZE-BRÜNING, Horst**
**Karl-Immermann-Strasse 32**
**D-4400 Münster(DE)**

(74) Vertreter: **Münch, Volker, Dr. et al**
**BASF Lacke + Farben AG**
**Patente/Lizenzen/Dokumentation**
**Postfach 61 23**
**D-48136 Münster (DE)**

**EP 0 470 082 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist eine flüssige, strahlenhärtbare Überzugsmasse für die Beschichtung von Glasoberflächen, enthaltend

A) 56 bis 89 Gew.-% mindestens eines, gegebenenfalls Harnstoffgruppen enthaltenden, diethylenisch - ungesättigten Polyurethans,

B) 3 bis 30 Gew.-% mindestens eines ethylenisch ungesättigten Monomers,

C) 0,5 bis 8 Gew.-% mindestens eines Photoinitiators sowie

D) 0,05 bis 6 Gew.-% eines Alkoxisilans,

wobei die Summe der Gewichtsanteile der Komponenten A bis D jeweils 100 Gew.-% beträgt.

Gegenstand der vorliegenden Erfindung ist außerdem ein Verfahren zum Beschichten von Glasoberflächen, insbesondere optischen Glasfasern unter Verwendung dieser strahlenhärtbaren Überzugsmassen.

Optische Glasfasern haben eine ständig wachsende Bedeutung auf dem Gebiet der Kommunikation als Lichtwellenleiterfasern erlangt. Für diesen Anwendungszweck ist es unbedingt erforderlich, die Glasoberfläche vor Feuchtigkeit und Abnutzungserscheinungen zu schützen. Die Glasfasern werden daher direkt im Anschluß an ihre Herstellung mit einer schützenden Lackschicht versehen.

So ist es beispielsweise aus der EP-A-114 982 bekannt, Glasfasern zunächst mit einer elastischen, aber wenig harten und wenig zähen Pufferschicht (Grundierung) zu versehen und danach einen strahlenhärtbarten Decklack zu applizieren, der eine hohe Härte und Zähigkeit aufweist. Der zweischichtige Aufbau soll einen guten Schutz der Glasfasern bei mechanischer Beanspruchung auch bei tiefen Temperaturen gewährleisten. Als Decklack werden in der EP-A-114 982 strahlenhärtbare Beschichtungszusammensetzungen auf Basis eines diethylenische Endgruppen aufweisenden Polyurethans, eines diethylenisch ungesättigten Esters eines Diglycidylethers eines Bisphenols und eines monoethylenisch ungesättigten Monomers, wobei die Glasübergangstemperatur des aus diesem Monomer hergestellten Homopolymers oberhalb 55 °C liegt, eingesetzt.

Derartige Glasfaserbeschichtungen weisen jedoch den erheblichen Nachteil einer nur schlechten Haftung auf der Glasoberfläche auf. Insbesondere bei Feuchtigkeitsbelastung wird diese Haftung noch weiter verschlechtert, unter Umständen sogar so stark, daß es zu einem vollständigen Verlust der Haftung auf der Glasoberfläche kommt. Das Problem der schlechten Haftung der Überzugsmassen auf der Glasoberfläche ist bekannt. Zur Haftungsverbesserung werden daher den Überzugsmassen häufig Organosilane als Haftvermittler zugesetzt. So ist es beispielsweise aus der EP-B-33043 bekannt, strahlenhärtbaren Beschichtungsmitteln auf Basis von Vinylmonomeren und reaktiven Polymeren (keine Polyurethane), wobei es erfindungswesentlich ist, daß entweder die Vinylmonomeren oder die Polymeren einen Thiiranring aufweisen, Organiosilane als Haftvermittler zuzusetzen. Als Beispiele für geeignete Verbindungen werden γ-Aminopropyltriethoxisilan, N,β-Aminoethyl-γ-aminopropyltrimethoxisilan und γ-Glycidylocipropyltrimethoxisilan genannt. Auf die Problematik des Haftungsverlustes der Glasfaserbeschichtungen bei Feuchtigkeitsbelastung wird in dieser Schrift nicht eingegangen.

Auch aus der JP-PS-45 138/85 vom 08.10.1985 (entspricht JP-OS 42 244/80 vom 25.03.80) ist es bekannt, Organosilane als Haftvermittler in strahlenhärtbaren Glasfaserbeschichtungsmitteln einzusetzen. Als filmbildende Komponente werden Polymere mit Azidgruppen eingesetzt. Als geeignete Silane werden γ-Methacryloxipropyltrimethoxisilane, γ-Aminopropyltrimethoxisilan und γ-Glycidyloxipropyltrimethoxisilan genannt. Erfindungswesentlich in der JP-PS 45 138 ist aber der Einbau der Azidgruppen in die Polymeren, um so die Härtungsgeschwindigkeit zu erhöhen. Auf die Problematik des Einflußes von Feuchtigkeit auf die Haftung der Glasfaserbeschichtung wird daher auch in dieser Schrift nicht eingegangen.

Weiterhin sind aus der EP-A-149 741 flüssige, strahlenhärtbare Glasfaserbeschichtungsmittel bekannt, die neben einer strahlenhärtbaren, polyethylenisch ungesättigten polymeren Verbindung 0,5 bis 5 %, bezogen auf die Überzugszusammensetzung eines Polyalkoxisilans enthalten. Geeignet sind solche Polyalkoxisilane, die einen organischen Substituenten tragen, der ein einzelnes aktives Amino- oder Mercaptyl-Wasserstoffatom trägt, das in einer Michael-Addition mit den ethylenisch ungesättigten Bindungen reagieren kann. Als Beispiel für geeignete Silane wird γ-Mercaptopropyltrimethoxisilan genannt. Gemäß der Lehre der EP-A-149741 gelingt es nur durch Einsatz derartiger Silane, die Haftung auch bei Feuchtigkeitsbelastung zu verbessern. Üblicherweise als Haftvermittler eingesetzte Verbindungen, wie z.B. γ-Aminopropyltriethoxisilan und N-β-(N-Vinylbenzylaminopropyl)-trimethoxisilan dagegen erwiesen sich nach der EP-A-149 741 bei Feuchtigkeitsbelastung als ungeeignet, die Haftung zu verbessern.

Schließlich sind aus der noch nicht veröffentlichten Patentanmeldung DE 38 40 644 flüssige, strahlenhärtbare Überzugsmassen für die Beschichtung von Glasoberflächen bekannt, die neben diethylenisch ungesättigtem Polyurethan und mindestens einem ethylenisch ungesättigten Monomer 0,05 bis 6,0 Gew.-% N-β-Aminoethyl-γ-aminopropyltrimethoxisilan oder γ-Aminopropyltrimethoxisilan oder N-Methyl-γ-aminopropyltrimethoxisilan oder triaminomodifiziertes Propyltrimethoxisilan enthalten. Diese strahlenhärtbaren Überzugsmassen zeichnen sich durch eine gute Haftung der Beschichtungen auf Glasoberflächen auch bei Feuchtigkeitsbelastung aus.

Der vorliegenden Erfindung lag die Aufgabe zugrunde, strahlenhärtbare Überzugsmassen für die Beschichtung von Glasoberflächen, insbesondere optischen Glasfasern, zur Verfügung zu stellen, bei denen die resultierende Beschichtung nach Feuchtigkeitsbelastung keinen oder nur einen geringen Verlust der Haftung im Vergleich mit der entsprechenden frisch hergestellten und direkt nach der Aushärtung untersuchten Beschichtung aufweist.

Weiterhin müssen diese strahlenhärtbaren Überzugsmassen klar sein, um so beim Einsatz als Beschichtungsmittel für optische Glasfasern einen möglichst geringen Dämpfungsverlust in bezug auf die eingestrahlte Intensität einer Information zu gewährleisten.

Die der Erfindung zugrundeliegende Aufgabe wird gelöst durch eine flüssige, strahlenhärtbare Überzugsmasse für die Beschichtung von Glasoberflächen, die

A) 56 bis 89 Gew.-% mindestens eines, gegebenenfalls Harnstoffgruppen enthaltendem, diethylenisch ungesättigten Polyurethans,

B) 3 bis 30 Gew.-% mindestens eines ethylenisch ungesättigten Monomers,

C) 0,5 bis 8 Gew.-% mindestens eines Photoinitiators,

D) 0,05 bis 6 Gew.-% eines Alkoxisilans,

enthält, wobei die Summe der Gewichtsanteile der Komponenten A bis D jeweils 100 Gew.-% beträgt. Die Überzugsmasse ist dadurch gekennzeichnet, daß

1.) als Komponente B ein oder mehrere carboxylgruppenhaltige, ethylenisch ungesättigte Monomere, gegebenenfalls zusammen mit anderen ethylenisch ungesättigten Monomeren und

2.) als Komponente D ein epoxidgruppenhaltiges Alkoxisilan

eingesetzt wird.

Gegenstand der vorliegenden Erfindung ist außerdem ein Verfahren zur Beschichtung einer Glasoberfläche unter Verwendung der erfindungsgemäßen Überzugsmassen, eine mit den erfindungsgemäßen Überzugsmassen beschichtete optische Glasfaser sowie die Verwendung dieser optischen Glasfasern als Lichtwellenleiter.

Es war angesichts der Vielzahl von als Haftvermittler bekannter Organosilicium-Verbindungen überraschend und nicht vorhersehbar, daß gerade durch den kombinierten Einsatz von epoxidgruppenhaltigen Alkoxisilanen und Verwendung von carboxylgruppenhaltigen ethylenisch ungesättigten Monomeren, ggf. in Kombination mit anderen ethylenisch ungesättigten Monomeren als Reaktivverdünner (Komponente B) die Haftung von strahlenhärtbaren Beschichtungsmitteln aus Basis von ungesättigten Polyurethanen auf Glasoberflächen bei Feuchtigkeitsbelastung gar nicht oder nur unwesentlich verschlechtert wird, während es bei alleinigem Einsatz von epoxidgruppenhaltigen Alkoxisilanen, wie z.B. $\gamma$-Glycidyloxipropyltrimethoxisilan, d.h. ohne Einsatz von carboxylgruppenhaltigen ethylenisch ungesättigten Monomeren als Reaktivverdünner bei Feuchtigkeitsbelastung zu einer erheblichen Verschlechterung der Haftung kommt.

Die erfindungsgemäßen strahlenhärtbaren Überzugsmassen weisen außerdem den Vorteil auf, daß diese Überzugsmassen klar sind und somit beim Einsatz als Beschichtungsmittel für optische Glasfasern einen möglichst geringen Dämpfungsverlust in bezug auf die eingestrahlte Intensität einer Information gewährleisten.

Im folgenden wird nun die erfindungsgemäße Überzugsmasse näher erläutert:

Die als filmbildende Komponente eingesetzten diethylenisch ungesättigten Polyurethane (A) können erhalten werden durch Umsetzung eines Di- oder Polyisocyanates mit einem Kettenverlängerungsmittel aus der Gruppe der Diole/Polyole und/- oder Diamine/Polyamine und/oder Dithiole/Polythiole und/oder Alkanolamine und anschließender Umsetzung der restlichen freien Isocyanatgruppen mit mindestens einem Hydrozialkylacrylat oder Hydrozialkylester anderer ethylenisch ungesättigter Carbonsäuren.

Die Mengen an Kettenverlängerungsmittel, Di- bzw. Polyisocyanat und Hydrosialkylester einer ethylenisch ungesättigten Carbonsäure werden dabei so gewählt, daß

1.) das Äquivalentverhältnis der NCO-Gruppen zu den reaktiven Gruppen des Kettenverlängerungsmittels (Hydroxyl-, Amino- bzw. Mercaptylgruppen) zwischen 3 : 1 und 1 : 2, bevorzugt bei 2 : 1 liegt und

2.) die OH-Gruppen der Hydrozialkylester der ethylenisch ungesättigten Carbonsäuren in stöchiometrischer Menge in bezug auf die noch freien Isocyanatgruppen des Präpolymeren aus Isocyanat und Kettenverlängerungsmittel vorliegen.

Außerdem ist es möglich, die Polyurethane (A) herzustellen, indem zunächst ein Teil der Isocyanatgruppen eines Di- oder Polyisocyanates mit mindestens einem Hydrosialkylester einer ethylenisch ungesättigten Carbonsäure umgesetzt wird und die restlichen Isocyanatgruppen anschließend mit einem Kettenverlängerungsmittel umgesetzt werden. Auch in diesem Fall werden die Mengen an Kettenverlängerungsmittel,

Isocyanat und Hydroxialkylester ungesättigter Carbonsäuren so gewählt, daß das Äquivalentverhältnis der NCO-Gruppen zu den reaktiven Gruppen des Kettenverlängerungsmittels zwischen 3 : 1 und 1 : 2, bevorzugt bei 2 : 1 liegt und das Äquivalentverhältnis der restlichen NCO-Gruppen zu den OH-Gruppen des Hydroxyalkylesters 1 : 1 beträgt.
Selbstverständlich sind auch sämtliche Zwischenformen dieser beiden Verfahren möglich. Beispielsweise kann ein Teil der Isocyanatgruppen eines Diisocyanates zunächst mit einem Diol umgesetzt werden, anschließend ein weiterer Teil der Isocyanatgruppen mit dem Hydroxialkylester einer ethylenisch ungesättigten Carbonsäure und im Anschluß hieran können die restlichen Isocyanatgruppen mit einem Diamin umgesetzt werden.

Diese verschiedenen Herstellverfahren der Polyurethane sind bekannt (vgl. beispielsweise EP-A-204 161) und bedürfen daher keiner genaueren Beschreibung.

Für die Herstellung der Polyurethane A geeignet sind aromatische, aliphatische und cycloaliphatische Di- und Polyisocyanate, wie z.B. 2,4-, 2,6-Toluylendiisocyanat und deren Gemische, 4,4'-Diphenylmethandiisocyanat, m-Phenylen-, p-Phenylen-, 4,4'Diphenyl-, 1,5-Naphthalin-, 1,4-Naphthalin-, 4,4'-Toluidin, Xylylendiisocyanat sowie substituierte aromatische Systeme, wie z.B. Dianisidindiisocyanate, 4,4'-Diphenyletherdiisocyanate oder Chlorodiphenylendiisocyanate und höherfunktionelle aromatische Isocyanate, wie z.B. 1,3,5-Triisocyanatobenzol, 4,4'-, 4''-Triisocyanattriphenylmethan, 2,4,6-Triisocyanatotoluol und 4,4'-Diphenyldimethylmethan-2,2', 5,5-tetraisocyanat; cycloaliphatische Isocyanate, wie z.B. 1,3-Cyclopentan-, 1,4-Cyclohexan-, 1,2-Cyclohexan, 4,4'-Methylen-bis-(cyclohexylisocyanat) und Isophorondiisocyanat; aliphatische Isocyanate, wie z.B. Trimethylen-, Tetramethylen-, Pentamethylen-, Hexamethylen-, Trimethylhesamethylen-1,6-diisocyanat und Tris-hexamethylen-triisocyanat sowie die in der EP-A-204161, Spalte 4, Zeilen 42 bis 49 beschriebenen von Dimerfettsäuren abgeleiteten Diisocyanate.

Bevorzugt eingesetzt werden 2,4- und 2,6-Toluylendiisocyanat, 4.4'-Diphenylmethandiisocyanat, Hexamethylendiisocyanat, Isophorondiisocyanat und 4,4' -Methylenbis-(cyclohexylisocyanat).

Beispiele für geeignete Di- und Polyole sind z.B. Ethylenglykol, Propylenglykol-1,2 und 1,3-Butandiole, Pentandiole, Neopentylglykol, Hexandiole, 2-Methylpentandiol-1,5, 2-Ethylbutandiol-1,4, Dimethylolcyclohexan, Glycerin, Trimethylolethan, Trimethylolpropan und Trimethylolbutan, Erythrit, Mesoerythrit, Arabit, Adonit, Xylit, Mannit, Sorbit, Dulcit, Hexantriol, (Poly)-Pentaerythritol; ferner Monoether, wie Diethylenglykol und Dipropylenglykol sowie Polyether, die Addukte aus den genannten Polyolen und Alkylenoziden. Beispiele von Alkylenosiden, die sich für eine Polyaddition an diese Polyole unter Bildung von Polyethern eignen, sind Ethylenoxid, Propylenoxid, Butylenozid und Styroloxid. Man bezeichnet diese Polyadditionsprodukte im allgemeinen als Polyether mit endständigen Hydrozylgruppen. Sie können linear oder verzweigt sein. Beispiele von solchen Polyethern sind Polyoxyethylenglykole von einem Molekulargewicht von 200 bis 4000, Polyoxypropylenglykole mit einem Molekulargewicht von 200 bis 4000, Polyoxytetramethylenglykol, Polyoxyhexamethylenglykol, Polyoxynonamethylenglykol, Polyoxydecamethylenglykol, Polyoxydodecamethylenglykol und Mischungen davon. Andere Typen von Polyoxyalkylenglykolethern können ebenfalls verwendet werden. Geeignete Polyetherpolyole sind auch diejenigen, die man erhält durch Umsetzung von derartigen Polyolen, wie Ethylenglykol, Diethylenglykol, Triethylenglykol, 1,4-Butandiol, 1,3-Butandiol, 1,6-Hexandiol und Mischungen davon; Glycerintrimethylolethan, Trimethylolpropan, 1,2,6-Hexantriol, Dipentaerythrit, Tripentaerythrit, Polypentaerythrit, Methylglukosiden und Saccharose mit Alkylenoxiden, wie Ethylenoxid, Propylenoxid oder Mischungen davon.
Beispiele für geeignete Polyetherdiole sind auch die Polymerisationsprodukte des Tetrahydrofurans oder Butylenoxids. Einsetzbar sind weiterhin auch Polyesterpolyole, bevorzugt Polyesterdiole, die z.B. herstellbar sind durch Umsetzung von den bereits genannten Glykolen mit Dicarbonsäuren, wie z.B. Phthalsäure, Isophthalsäure, Hexahydrophthalsäure, Adipinsäure, Azelain-, Sebazin-, Malein-, Glutar-, Tetrachlorphthalsäure und Hexachlorheptandicarbonsäure. Anstelle dieser Säuren können auch ihre Anhydride, soweit sie existieren, verwendet werden.

Einsetzbar sind auch Polycaprolactondiole und -triole. Diese Produkte erhält man beispielsweise durch Umsetzung eines $\epsilon$-Caprolactons mit einem Diol. Solche Produkte sind in der US-PS 3 169 945 beschrieben. Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrende Molekülanteile können der Formel

$$-\overset{\overset{\displaystyle O}{\|}}{C}-(CHR)_n-CH_2O-$$

entsprechen, in der n bevorzugt 4 bis 6 ist und der Substituent Wasserstoff, ein Alkylrest, ein Cycloalkylrest oder ein Alkoxyrest ist, wobei kein Substituent mehr als 12 Kohlenstoffatome enthält und die gesamte Anzahl der Kohlenstoffatome in dem Substituenten in dem Lactonring 12 nicht übersteigt.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, zum Beispiel 6 bis 8 Kohlenstoffatome und wobei mindestens 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeine Formel dargestellt werden:

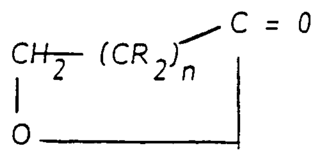

in der n und R die bereits angegebene Bedeutung haben. Die bei der Erfindung für die Herstellung der Polyesterdiole bevorzugten Lactone sind die Caprolactone, bei denen n den Wert 4 hat. Das am meisten bevorzugte Lacton ist daas substituierte ε-Caprolacton, bei dem n den Wert 4 hat und alle R-Substituenten Wasserstoff sind. Dieses Lacton wird besonders bevorzugt, da es in großen Mengen zur Verfügung steht und Überzüge mit ausgezeichneten Eigenschaften ergibt.

Außerdem können verschiedene andere Lactone einzeln oder in Kombination benutzt werden.

Beispiele von für die Umsetzung mit dem Lacton geeigneten aliphatischen Diolen sind die bereits oben für die Umsetzung mit den Carbonsäuren aufgeführten Diole.

Beispiele für geeignete Amine sind Ethylendiamin, Tri-, Tetra-, Penta-, Hexa-, Hepta-, Nona-, Deca und Dodecamethylendiamin, 2,2,4- bzw. 2,4,4-Trimethylhexamethylendiamin, Propylendiamin sowie die entsprechenden Polyalkylendiamine, wie z.B. Polypropylendiamin, Polyetherdiamine mit einem Molekulargewicht von 200 bis 4000, z.B. Polyosylethylendiamin, Polyoxypropylendiemin, Poloxytetramethylendiamin, 1,3- bzw. 1,4-Butylendiamin, Isophorondiamin, 1,2- und 1,4-Diaminocyclohexan, 4,4'-Diaminodicyclohexylmethan, Bis-(3-methyl-4- aminocyclohexyl-)methan, 2,2-Bis(4-aminocyclohexyl-)propan, 4,7-Dioxadecan-1,10-diamin, 4,9-Dioxadodecan-1,12-diamin, 7-Methyl-4-, 10-dioxatridecan-1,13-diamin, Nitriltris-(ethanamin), Ethanolamin, Propanolamin, N-(2-Aminoethyl)ethanol, Polyetherpolysmine, Bis-(3-aminopropyl-)-methylamin, 3-Amino-1-(methylamino-)propan, 3-Amino-1-(cyclohexylamino-)propan, N-(2-hydroxiethyl)ethylendiamin, Tris-(2-aminoethyl)amin sowie Polyamine der Formel $H_2N-(R_2-NH)-_nR_1-NH_2$. n ist eine ganze Zahl zwischen 1 und 6, bevorzugt 1 - 3. $R_1$ und $R_2$ sind gleiche oder verschiedene Alkylengruppen bzw. Cycloalkylengruppen bzw. Ethergruppen enthaltende Alkylengruppen mit 2-6, bevorzugt 2-4 C-Atomen. Beispiele für derartige Polyalkylenpolyamine sind Diethylentriamin, Triethylentetramin, Tetraethylenpentamin, Dipropylentriamin, Tripropylentetramin, Tetrapropylenpentamin und Dibutylentriamin.

Als Kettenverlängerungsmittel einsetzbar sind auch Di- und Polythiole, wie z.B. Dithioethylenglykol, 1,2- und 1,3-Propandithiol, Butandithiole, Pentandithiole, Hexandithiole sowie die übrigen S-H-analogen Verbindungen der aufgeführten Di- und Polyole.

Zur Einführung der ethylenisch ungesättigten Gruppen in das Polyurethan geeignet sind Hydrozialkylester ethylenisch ungesättigter Carbonsäuren, wie z.B. Hydroxiethylacrylat. Hydroxipropylacrylat, Hydroxibutylacrylat, Hydroxiamylacrylat, Hydroxihezylacrylat, Hydroxioctylacrylat sowie die entsprechenden Hydrosialkylester der Methacryl-, Fumar-, Malein-, Itacon-, Croton- und Isocrotonsäure.

Das ungesättigte Polyurethan wird in den Überzugsmassen in einer Menge von 56 bis 89 Gew.-% eingesetzt.

Neben dem gerade beschriebenen Polyurethan A enthält das erfindungsgemäße Überzugsmittel noch 3 bis 30 Gew.-%, mindestens eines ethylenisch ungesättigten Monomers B. Es ist erfindungswesentlich, daß die Komponente B mindestens zum Teil, bevorzugt zu 50 bis 100 Gew.-% aus einem oder mehreren carboxylgruppenhaltigen ethylenisch ungesättigten Monomeren besteht. Ggf. können zusammen mit diesem bzw. diesen carboxylgruppenhaltigen Monomeren noch weitere ethylenisch ungesättigte Monomere eingesetzt werden, wobei die Menge dieser Monomeren so zu wählen ist, daß die Gesamtmenge der Komponente B 3 bis 30 Gew.-% beträgt. Besonders bevorzugte Überzugsmassen werden erhalten, wenn die Überzugsmasse 5 bis 18 Gew.-%, bezogen auf das Gesamtgewicht der Überzugsmasse, eines oder mehrerer carboxylgruppenhaltigen ethylenisch - ungesättigten Monomers enthält. Selbstverständlich können auch in diesem Fall ggf. noch andere ethylenisch ungesättigte Monomere zugesetzt werden, wobei die Menge dieser Monomeren so zu wählen ist, daß der Gesamtgehalt an ethylenisch ungesättigten Monomeren (Komponente B) maximal 30 Gew.-% beträgt.

Beispiele für als Komponente B geeignete carboxylgruppenhaltige ethylenisch-ungesättigte Monomere sind β-Carboxiethylacrylat der Formel (I) mit n = 1 im Mittel

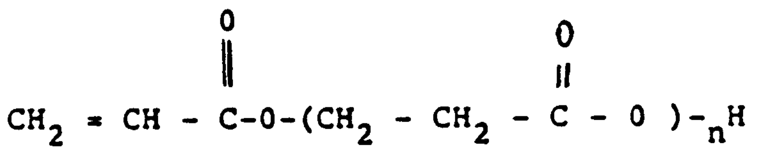 (I),

Acrylsäure, Methacrylsäure, Fumar-, Malein-, Undecen-, Croton-, Isocroton-, Zimtsäure.

Falls Acrylsäure als Carboxylgruppenhaltiges Monomer eingesetzt wird, so wird die Acrylsäure bevorzugt in Kombination mit einem weiteren carboxylgruppenhaltigen Monomer eingesetzt.

Bevorzugt eingesetzt werden das β-Carboxiethylacrylat der Formel (I) mit n = 1 im Mittel.

Als Beispiele für Monomere, die ggf. zusammen mit dem bzw. den Carboxylgruppenhaltigen Monomeren eingesetzt werden können, seien Ethoxiethoxiethylacrylat, N-Vinylpyrrolidon, Phenoxiethylacrylat, Dimethylaminoethylacrylat, Hydroxiethylacrylat, Butoxiethylacrylat, Isobornylacrylat, Dimethylacrylamid und Dicyclopentylacrylat genannt. Geeignet sind außerdem Di- und Polyacrylate, wie z.B. Butandioldiacrylat, Trimethylolpropandi- und Triacrylat, Pentaerythritdiacrylat sowie die in der EP-A-250 631 beschriebenen, langkettigen linearen Diacrylate mit einem Molekulargewicht von 400 bis 4000, bevorzugt von 600 bis 2500. Beispielsweise können die beiden Acrylatgruppen durch eine Polyoxibutylenstruktur getrennt sein. Einsetzbar sind außerdem 1,12-Dodecyldiacrylat und das Umsetzungsprodukt von 2 Molen Acrylsäure mit einem Mol eines Dimerfettalkohols, der im allgemeinen 36 C-Atome aufweist.
Geeignet sind auch Mischungen der gerade beschriebenen Monomeren.

Für die Kombination mit dem carboxylgruppenhaltigen Monomer werden bevorzugt N-Vinylpyrrolidon, Phenoxiethylacrylat, Trimethylolpropantriacrylat, Isobornylacrylat sowie Mischungen dieser Monomere eingesetzt.

Der in den erfindungsgemäßen Überzugsmassen in einer Menge von 0,5 bis 8 Gew.-%, bevorzugt 2 bis 5 Gew.-%, eingesetzte Photoinitiator variiert mit der zur Härtung der Beschichtungsmittel eingesetzten Strahlung (UV-Strahlung, Elektronenstrahlung, sichtbares Licht). Bevorzugt werden die erfindungsgemäßen Überzugsmassen mittels UV-Strahlung gehärtet. In diesem Fall werden üblicherweise Photoinitiatoren auf Keton-Basis eingesetzt, beispielsweise Acetophenon, Benzophenon, Diethoxiacetophenon, m-Chloroacetophenon, Propiophenon, Benzoin, Benzil, Benzildimethylketal, Anthrachinon, Thioxanthon und Thixanthon-Derivate sowie Mischungen verschiedener Photoinitiatoren.

Als weiteren erfindungswesentlichen Bestandteil enthalten die überzugsmassen 0,05 bis 6,0 Gew.-%, bevorzugt 1,2 bis 2,0 Gew.-% eines epoxidgruppenhaltigen Alkoxisilans. Bevorzugt eingesetzte Alkoxisilane sind 2-(3,4-Epoxycyclohexyl-)- ethyltriethoxisilan, γ-Glycidyloxipropyltrimethoxisilan und 3,4-Epoxybutyltriethoxisilan. Diese Alkoxisilane sind handelsübliche Produkte und brauchen daher nicht näher erläutert zu werden.

Die erfindungsgemäßen Überzugsmassen können ggf. außerdem noch übliche Hilfs- und Zusatzstoffe in üblichen Mengen, bevorzugt 0,05 bis 10 Gew.-%, bezogen auf das Gewicht der Überzugsmasse, enthalten. Beispiele für derartige Stoffe sind Verlaufsmittel und Weichmacher. Die Überzugsmassen können mittels bekannter Applikationsmethoden, wie z.B. Spritzen, Walzen, Fluten, Tauchen, Rakeln oder Streichen, auf die Glasoberfläche aufgebracht werden.

Die Härtung der Lackfilme erfolgt mittels Strahlung, bevorzugt mittels UV-Strahlung. Die Anlagen und Bedingungen für diese Härtungsmethoden sind aus der Literatur bekannt (vgl. z.B. R. Holmes, U.V. and E.B. Curing Formulations for Printing Inks, Coatings and Paints, SITA Technology, Academic Press, London, United Kingdom 1984) und bedürfen keiner weiteren Beschreibung.

Gegenstand der vorliegenden Erfindung ist auch ein Verfahren zum Beschichten einer Glasoberfläche, bei dem

I.) eine strahlenhärtbare Überzugsmasse aufgebracht wird, die

A) 56 bis 89 Gew.-% mindestens eines, gegebenenfalls Harnstoffgruppen enthaltenden, diethylenisch ungesättigten Polyurethans,

B) 3 bis 30 Gew.-% mindestens eines ethylenisch ungesättigten Monomers,

C) 0,5 bis 8 Gew.-% mindestens eines Photoinitiators sowie

D) 0,05 bis 6 Gew.-% eines Alkoxisilans,

enthält, wobei die Summe der Komponenten A bis D jeweils 100 Gew.-% beträgt.

II.) die Überzugsmasse mittels UV- oder Elektronenstrahlung gehärtet wird.

Das Verfahren ist dadurch gekennzeichnet, daß

1.) als Komponenten B ein oder mehrere carboxylgruppenhaltige, ethylenisch ungesättigte Monomere, gegebenenfalls zusammen mit anderen ethylenisch ungesättigten Monomeren und

2.) als Komponente D ein epoxidgruppenhaltiges Alkoxisilan

eingesetzt wird.

Zur näheren Beschreibung des in dem erfindungsgemäßen Verfahren eingesetzten Überzugsmittels sowie der Durchführung dieses Verfahrens wird auf die Seiten 6 bis 15 dieser Beschreibung verwiesen.

Das erfindungsgemäße Verfahren ist besonders gut geeignet für die Beschichtung von optischen Glasfasern. Insbesondere bei Verwendung der optischen Glasfasern als Lichtwellenleiter ist es wichtig, daß die zum Schutz der Oberfläche applizierten Überzugsmassen auch bei Feuchtigkeitsbelastung eine gute Haftung auf der Glasfaseroberfläche aufweisen. Haftungsverluste der Beschichtung nach Feuchtigkeitsbelastung - die sich bei der Verwendung der Glasfasern als Lichtwellenleiter nicht vermeiden läßt - (z.B. liegen Glasfasern an Kopplungsstationen frei an der Luft) führen zu Lackschäden auf der Glasfaseroberfläche. Diese dann ungeschützte Oberfläche kann nun sehr leicht, beispielsweise durch Staubkörner, beschädigt werden, was zu einem Verlust der optischen Eigenschaften führt. Gerade durch das erfindungsgemäße Verfahren bzw. die erfindungsgemäßen Überzugsmassen ist es aber möglich, diese Nachteile zu vermeiden und Beschichtungen mit sehr guter Haftung auch nach Feuchtigkeitsbelastung zur Verfügung zu stellen.

Die erfindungsgemäßen Überzugsmassen können dabei entweder in Form einer Einschichtlackierung oder als Grundierung einer Zweischichtlackierung auf die Glasfasern aufgebracht werden. Geeignete Decklacke im Fall der Zweischichtlackierung sind beispielsweise in der EP-B- 114 982 beschrieben.

Die Erfindung wird in den folgenden Beispielen näher erläutert. Alle Angaben über Teile und Prozentsätze sind Gewichtsangaben, falls nicht ausdrücklich etwas anderes festgestellt wird.

Beispiel 1 (Vergleich)

Es wird nach bekannten Methoden (vgl. z.B. EP-B-114 982) eine strahlenhärtbare Überzugsmasse, bestehend aus 75,8 Teilen ungesättigten Polyurethans, 9,2 Teilen Trimethylolpropantriacrylat, 12 Teilen Phenoxiethylacrylat, 0,5 Teilen Benzildimethylketal und 2,5 Teilen Benzophenon hergestellt, indem in Gegenwart von Trimethylolpropantriacrylat und Phenoxiethylacrylat zunächst 4 Mole 4,4'-Methylen-bis-(cyclohexylisocyanat) mit 2 Molen Polyoxipropylenglykol (Molekulargewicht 1000) umgesetzt werden. Dieses erhaltene Zwischenprodukt wird mit 2 Molen 2-Hydroxiethylacrylat und danach mit 1 Mol Polyoxipropylendiamin (Molekulargewicht 230) umgesetzt. Danach werden die Photoinitiatoren zu der Mischung gegeben.

Gut gereinigte (vor allem fettfreie) Glasplatten (Breite x Länge = 98 x 151 mm) werden am Rand mit Tesakrepp$^{R}$-Klebeband Nr. 4432 (Breite 19 mm) abgeklebt und die Überzugsmasse aufgerakelt (Trockenfilmstärke 180 $\mu$m).

Die Aushärtung erfolgt mit Hilfe einer UV-Bestrahlungsanlage, ausgerüstet mit zwei Hg-Mitteldruckstrahlern von je 80 W/cm Lampenleistung, bei einer Bandgeschwindigkeit von 40 m/Minute, in 2 Durchläufen bei Halblastbetrieb (= 40 W/cm).

Die eingestrahlte Dosis beträgt hierbei 0,08 J/cm$^2$ (gemessen mit dem Dosimeter, UVICURE, System EIT der Firma Eltosch).

Sofort anschließend wird die Haftung wie folgt geprüft:

- Folienanfang vorsichtig mit einer Klinge vom Glas etwas lösen.
- Mit Hilfe von Klebeband einen Drahtbügel an dem gelösten Folienteil befestigen.
- Federwaage einhängen und mit möglichst konstanter Geschwindigkeit in rechtem Winkel abziehen.
- Benötigte Aufzugskraft in g von der Meß-Skala ablesen.

Die Auswertung der Haftungsprüfung erfolgt durch Mittelung der erhaltenen Werte aus einer Doppelbestimmung und Überprüfung der Reproduzierbarkeit von guten (= hohen) Haftungswerten durch mehrere Wiederholungen.

Das Ergebnis der Haftungsprüfung ist in Tabelle 2 dargestellt.
Neben dieser durchgeführten Haftungsprüfung ist auch ein Rollenschälversuch gemäß DIN 55 289 möglich, der aber nicht durchgeführt wurde.
Zur Prüfung der Haftung nach Feuchtigkeitsbelastung werden außerdem die Glasplatten direkt nach der Härtung 12 h in geeigneten Klimakammern mit einer definierten Luftfeuchtigkeit von 90 % relativer Luftfeuchtigkeit (r.F.) (entsprechend DIN 50005) bei Raumtemperatur (25 °C) gelagert.
Sofort nach Beendigung der Exposition wird der Abziehtest mit der Federwaage analog der Haftungsprüfung direkt nach Bestrahlung durchgeführt.

Die Auswertung der Haftungsprüfung erfolgt auch in diesem Fall durch Mittelwertbildung aus einer Doppelbestimmung. Bei guten (hohen) Haftungswerten werden mindestens zwei Wiederholungsmessungen zur Überprüfung der Reproduzierbarkeit durchgeführt.
Das Ergebnis dieser Prüfung ist ebenfalls in Tabelle 2 dargestellt.

Die durchgeführte Prüfung der Haftung auf Fensterglas ergibt als Labormethode gute, aussagekräftige Ergebnisse. Diese Methode wird auch bei den Glasfaserherstellern durchgeführt, da sie praxisnahe Werte ergibt, die mit den Haftungswerten auf optischen Glasfasern (typische Stärke der Faser 125 µm) sehr gut übereinstimmen.

Beispiel 2 (Vergleich)

Analog zu dem Vergleichsbeispiel 1 wird ein strahlenhärtbares Beschichtungsmittel auf Basis des ungesättigten Polyurethans hergestellt. Im Unterschied zum Vergleichsbeispiel 1 enthält das Beschichtungsmittel zusätzlich 2 Gew.-Teile, γ-Glycidyloxipropyltrimethoxisilan.

Analog zum Vergleichsbeispiel 1 wird dieses Beschichtungsmittel mittels eines Rakels auf Glasplatten aufgetragen (Trockenfilmstärke 180 µm) und mit einer Quecksilbermitteldruckdampflampe (Dosisleistung ebenfalls 0,08 J/cm²) gehärtet. Direkt nach der Aushärtung der Beschichtungsmittel sowie nach 12 h Lagerung bei 90 % relativer Luftfeuchtigkeit bei Raumtemperatur wird, wie im Vergleichsbeispiel 1 beschrieben, die Haftung der Beschichtung gemessen. Die Ergebnisse sind in Tabelle 2 dargestellt.

Beispiel 3 (Vergleich)

Analog zu dem Vergleichsbeispiel 1 wird ein strahlenhärtbares Beschichtungsmittel auf Basis des ungesättigten Polyurethans hergestellt, allerdings mit dem Unterschied, daß statt 12 Teilen Phenoxiethylacrylat jetzt 12 Teile β-Carboxiethylacrylat der Formel

$$CH_2 = CH - \overset{\overset{O}{\|}}{C} - O - (CH_2 - CH_2 - \overset{\overset{O}{\|}}{C} - O \rightarrow_n H \text{ mit}$$

n = 1 im Mittel

(Handelsprodukt "SIPOMER B-CEA" der Firma ALCOLAC) eingesetzt werden.
Die Ergebnisse der Haftungsprüfung sind in Tabelle 2 dargestellt.

Beispiel 4

Analog zu dem Beispiel 3 wird ein strahlenhärtbares Beschichtungsmittel auf der Basis des ungesättigten Polyurethans und β-carboxiethylacrylat hergestellt. Im Unterschied zu Beispiel 3 enthält das Beschichtungsmittel zusätzlich 2 Teile γ-Glycidyloxipropyltrimethoxisilan.
Die Ergebnisse der Haftungsprüfung sind in Tabelle 2 dargestellt.

Beispiel 5

Analog zu dem Beispiel 3 wird ein strahlenhärtbares Beschichtungsmittel hergestellt, das im Unterschied zu Beispiel 3 zusätzlich 2 Teile 2-(3,4-Epoxycyclohexyl-)ethyltriethoxisilan, enthält.
Die Ergebnisse der Haftungsprüfung sind in Tabelle 2 dargestellt.

Beispiel 6 (Vergleich)

Analog zu dem Beispiel 3 wird ein strahlenhärtbares Beschichtungsmittel hergestellt, das im Unterschied zu Beispiel 3 zusätzlich 2 Teile N-$\beta$-Aminoethyl-$\gamma$aminopropyltrimethoxisilan enthält.
Die Ergebnisse der Haftungsprüfung sind in Tabelle 2 dargestellt.

Beispiel 7 (Vergleich)

Analog zu dem Vergleichsbeispiel 1 wird ein strahlenhärtbares Beschichtungsmittel auf Basis des ungesättigten Polyurethans hergestellt, allerdings mit den Unterschieden, daß statt 12 Teilen Phenoxiethylacrylat jetzt 12 Teile Acrylsäure eingesetzt werden.
Die Ergebnisse der Haftungsprüfung sind in Tabelle 2 dargestellt.

Beispiel 8

Analog zu dem Beispiel 7 wird ein strahlenhärtbares Beschichtungsmittel hergestellt, das im Unterschied zu Beispiel 7 zusätzlich 2 Gew.-Teile $\gamma$-Glycidyloxipropyltrimethoxisilan enthält.

Tabelle 1: Zusammensetzung der Überzugsmassen

| Beispiel | 1 | 2 | 3 | 4 | 5 | 6 | 7 | 8 |
|---|---|---|---|---|---|---|---|---|
| ungesättigtes Polyurethan 1) | 75,8 | 75,8 | 75,8 | 75,8 | 75,8 | 75,8 | 75,8 | 75,8 |
| Trimethylolpropantriacrylat | 9,2 | 9,2 | 9,2 | 9,2 | 9,2 | 9,2 | 9,2 | 9,2 |
| Phenoxiethylacrylat | 12 | 12 | - | - | - | - | - | - |
| β-Carboxiethylacrylat | - | - | 12 | 12 | 12 | 12 | - | - |
| Acrylsäure | - | - | - | - | - | - | 12 | 12 |
| Benzildimethylketal | 0,5 | 0,5 | 0,5 | 0,5 | 0,5 | 0,5 | 0,5 | 0,5 |
| Benzophenon | 2,5 | 2,5 | 2,5 | 2,5 | 2,5 | 2,5 | 2,5 | 2,5 |
| Alkoxisilan 1 2) | - | 2,0 | - | 2,0 | - | - | | 2,0 |
| Alkoxisilan 2 3) | - | - | - | - | 2,0 | - | | |
| Alkoxisilan 3 4) | - | - | - | - | - | 2,0 | | |

Erläuterungen zu Tabelle 1

1) Die Herstellung des Polyurethans ist in Beispiel 1 beschrieben.

2) γ-Glycidyloxipropyltrimethoxisilan

3) 2-(3,4-Epoxycyclohexyl-)ethyltriethoxisilan

4) N-β-Aminoethyl-γ-aminopropyltrimethoxisilan

Tabelle 2: Ergebnisse der Haftungsprüfung

| Beispiel | Haftvermittler (D) | Haftung nach Aush. (kg) | Haftung 12 h, 90 % r.F. (kg |
|---|---|---|---|
| 1 | - | 1000 - 1100 | 25 |
| 2 | γ-Glycidyloxipropyltrimethoxisilan | 1000 - 1100 | 50 - 100 |
| 3 | - | 1100 - 1200 | 20 - 50 |
| 4 | γ-Glycidyloxipropyltrimethoxisilan | 1200 - 1400 | 800 - 850 |
| 5 | 2-(3,4-Epoxycyclohexyl-)ethyl-triethoxisilan | 1200 - 1400 | 800 - 850 |
| 6 | N-β-Aminoethyl-γ-aminopropyltri-methoxisilan 1) | 1000 - 1200 | 850 - 950 |
| 7 | - | 1000 - 1100 | 50 - 100 |
| 8 | γ-Glycidyloxipropyltrimethoxxisilan | 1000 - 1200 | 800 - 850 |

1) Beschichtungsmittel trübe

Die Beispiele 1 - 8 zeigen, daß durch Einsatz epoxidgruppenhaltiger Alkoxisilane in Kombination mit carboxylgruppenhaltigen ethylenisch ungesättigten Monomeren als einer Komponente des Reaktivverdünners (Beispiele 4, 5, 8) Beschichtungsmittel erhalten werden, die klar sind und die zu Beschichtungen führen, bei denen kein oder nur ein sehr geringer Haftungsverlust nach Feuchtigkeitsbelastung auftritt, während bei Einsatz epoxidgruppenhaltiger Alkoxisilane ohne Mitverwendung von carboxylgruppenhaltigen

Monomeren als Reaktivverdünner (Beispiel 2) und nur bei Mitverwendung von carboxylgruppenhaltigen Monomeren als Reaktivverdünner ohne Kombination mit epoxidgruppenhaltigen Alkoxisilanen (Beispiele 3 und 7) ein erheblicher Haftungsverlust bei Feuchtigkeitsbelastung zu beobachten ist. Durch Mitverwendung von carboxylgruppenhaltigen Monomeren als Reaktivverdünner in Kombination mit anderen bekannten Haftvermittlern, beispielsweise aminfunktionellen Alkoxisilanen, ist zwar auch nur ein sehr geringer oder kein Haftungsverlust nach Feuchtigkeitsbelastung feststellbar, jedoch sind diese Beschichtungsmittel trübe und daher nicht für die Beschichtung von optischen Glasfasern geeignet (Beispiel 6).

## Patentansprüche

**1.** Flüssige, strahlenhärtbare Überzugsmasse für die Beschichtung von Glasoberflächen, enthaltend
A) 56 bis 89 Gew.-% mindestens eines, gegebenenfalls Harnstoffgruppen enthaltenden, diethylenisch - ungesättigten Polyurethans,
B) 3 bis 30 Gew.-% mindestens eines ethylenisch ungesättigten Monomers,
C) 0,5 bis 8 Gew.-% mindestens eines Photoinitiators sowie
D) 0,05 bis 6 Gew.-% eines Alkoxisilans,
wobei die Summe der Gewichtsanteile der Komponenten A bis D jeweils 100 Gew.-% beträgt, dadurch gekennzeichnet, daß
1.) als Komponente B ein oder mehrere carboxylgruppenhaltige, ethylenisch ungesättigte Monomere, gegebenenfalls zusammen mit anderen ethylenisch ungesättigten Monomeren und
2.) als Komponente D ein epoxidgruppenhaltiges Alkoxisilan
eingesetzt wird.

**2.** Überzugsmasse nach Anspruch 1, dadurch gekennzeichnet, daß die Komponente D in einer Menge von 1,2 bis 2,0 Gew.-% eingesetzt wird, wobei die Summe der Gewichtsanteile der Komponenten A bis D jeweils 100 Gew.-% beträgt.

**3.** Überzugsmasse nach Anspruch 1 oder 2, dadurch gekennzeichnet, daß als Komponente D γ-Glycidyloxipropyltrimethoxisilan oder 2-(3,4-Epoxycyclohexyl-)-ethyltriethoxisilan oder 3,4-Epoxybutyltriethoiisilan eingesetzt wird.

**4.** Überzugsmasse nach einem der Ansprüche 1 bis 3, dadurch gekennzeichnet, daß die Komponente B zu 50 bis 100 Gew.-% aus einem oder mehreren carboxylgruppenhaltigen ethylenisch ungesättigten Monomeren besteht.

**5.** Überzugsmasse nach einem der Ansprüche 1 bis 4, dadurch gekennzeichnet, daß die Überzugsmasse 5 bis 18 Gew.-%, bezogen auf das Gesamtgewicht der Überzugsmasse, eines oder mehrerer carboxylgruppenhaltiger ethylenisch ungesättigten Monomers und ggf. weitere ethylenisch ungesättigte Monomere enthält, wobei die Gesamtmenge der Monomeren maximal 30 Gew.-%, bezogen auf das Gesamtgewicht der Überzugsmasse, beträgt.

**6.** Überzugsmasse nach einem der Ansprüche 1 bis 5, dadurch gekennzeichnet, daß als Komponente B mindestens zum Teil β-Carboxyethylacrylat der Formel (I)

$$CH_2 = CH - \overset{\overset{O}{\|}}{C}-O-(CH_2 - CH_2 - \overset{\overset{O}{\|}}{C} - O)-_nH$$

(I)

mit im Mittel n = 1 eingesetzt wird.

**7.** Überzugsmasse nach einem der Ansprüche 1 bis 6, dadurch gekennzeichnet, daß sie zusätzlich mindestens einen Synergisten und/oder übliche Hilfs- und Zusatzstoffe enthält.

**8.** Verfahren zum Beschichten einer Glasoberfläche, bei dem
I) eine strahlenhärtbare Überzugsmasse aufgebracht wird und
II) die Überzugsmasse mittels UV- oder Elektronenstrahlung gehärtet wird
dadurch gekennzeichnet, daß eine Überzugsmasse nach einem der Ansprüche 1 bis 7, aufgebracht wird.

**9.** Verfahren nach Anspruch 8, dadurch gekennzeichnet, daß die Glasoberfläche die Oberfläche einer optischen Glasfaser ist.

**10.** Optische Glasfaser, dadurch gekennzeichnet, daß sie mit einer Überzugsmasse nach einem der Ansprüche 1 bis 7 beschichtet ist.

**11.** Verwendung der optischen Glasfaser nach Anspruch 10 als Lichtwellenleiter.

**12.** Verwendung der strahlenhärtbaren Überzugsmasse nach einem der Ansprüche 1 bis 7 für die Beschichtung von optischen Glasfasern.

**Claims**

**1.** Liquid, radiation-curable coating composition for the coating of glass surfaces, containing
A) 56 to 89% by weight of at least one diethylenically unsaturated polyurethane optionally containing urea groups,
B) 3 to 30% by weight of at least one ethylenically unsaturated monomer,
C) 0.5 to 8% by weight of at least one photoinitiator and
D) 0.05 to 6% by weight of an alkoxysilane,
the sum total of the percentages by weight of the components A to D being 100% by weight in each case, characterized in that it uses
1.) one or more ethylenically unsaturated monomers containing carboxyl groups, optionally together with other ethylenically unsaturated monomers as the component B and
2.) an alkoxysilane containing epoxide groups as the component D.

**2.** Coating composition according to Claim 1, characterized in that the component D is used in an amount of 1.2 to 2.0% by weight, the sum total of the percentages by weight of the components A to D being 100% by weight in each case.

**3.** Coating composition according to Claim 1 or 2, characterized in that $\gamma$-glycidyloxropyltrimethoxysilane or 2-(3,4-epoxycyclohexyl)ethyltriethoxysilane or 3,4-epoxybutyltriethoxysilane is used as the component D.

**4.** Coating composition according to any one of Claims 1 to 3, characterized in that 50 to 100% by weight of the component B consist of one or more ethylenically unsaturated monomers containing carboxyl groups.

**5.** Coating composition according to any one of Claims 1 to 4, characterized in that the coating composition comprises 5 to 18% by weight, based on the total weight of the coating composition, of one or more ethylenically unsaturated monomers containing carboxyl groups and optionally other ethylenically unsaturated monomers, the total amount of the monomers, based on the total weight of the coating composition, not exceeding 30% by weight.

**6.** Coating composition according to any one of Claims 1 to 5, characterized in that at least a part of the $\beta$-carboxyethyl acrylate of the formula (I)

$$CH_2=CH-\overset{\overset{\displaystyle O}{\|}}{C}-O-(CH_2-CH_2-\overset{\overset{\displaystyle O}{\|}}{C}-O)_n-H \qquad (I)$$

in which n = 1 on average is used as the component B.

**7.** Coating composition according to any one of Claims 1 to 6, characterized in that it additionally comprises at least one synergistic substance and/or customary auxiliaries and additives.

**8.** Process for the coating of a glass surface, in which
I) a radiation-curable coating composition is applied and
II) the coating composition is cured by UV radiation or an electron beam,
characterized in that a coating composition according to any one of Claims 1 to 7 is applied.

**9.** Process according to Claim 8, characterized in that the glass surface is the surface of an optical glass fibre.

**10.** Optical glass fibre, characterized in that it is coated by a coating composition according to any one of Claims 1 to 7.

**11.** Use of the optical glass fibre according to Claim 10 as a light conductor.

**12.** Use of the radiation-curable coating composition according to any one of Claims 1 to 7 for the coating of optical glass fibres.

**Revendications**

**1.** Composition de revêtement fluide et durcissable par rayonnement pour l'enduction de surfaces de verre, contenant
A) 56 à 89 % en poids d'au moins un polyuréthane diéthyléniquement insaturé, contenant éventuellement des groupes urée,
B) 3 à 20 % en poids d'au moins un monomère éthyléniquement insaturé,
C) 0,5 à 8 % en poids d'au moins un photoinitiateur, ainsi que
D) 0105 à 6 % en poids d'un alcoxysilane,
la somme des parties en poids des composants A à D s'élevant chaque fois à 100 % en poids, caractérisée en ce qu'on utilise
1.) en tant que composant B un ou plusieurs monomères éthyléniquement insaturés contenant des groupes carboxyle, le cas échéant en association avec d'autres monomères éthyléniquement insaturés et
2.) en tant que composant D un alcoxysilane contenant des groupes époxy.

**2.** Composition de revêtement selon la revendication 1, caractérisée en ce que le composant D est utilisé dans une quantité de 1,2 à 2,0 % en poids, la somme des parties en poids des composants A à D s'élevant toujours à 100 % en poids.

**3.** Composition de revêtement selon la revendication 1 ou 2, caractérisée en ce qu'en tant que composant D on utilise le $\gamma$-glycidyloxypropyltriméthoxysilane ou le 2-(3,4-époxycyclohexyl)-éthyltriéthoxysilane ou le 3,4-époxybutyltriéthoxysilane.

**4.** Composition de revêtement selon l'une quelconque des revendications 1 à 3, caractérisée en ce que le composant B est constitué pour 50 à 100 % en poids d'un ou de plusieurs monomères insaturés éthyléniquement contenant des groupes carboxyle.

**5.** Composition de revêtement selon l'une quelconque des revendications 1 à 4, caractérisée en ce que la composition de revêtement contient de 5 à 18 % en poids, par rapport au poids total de la composition de revêtement, d'un ou de plusieurs monomères éthyléniquement insaturés contenant des groupes carboxyle et le cas échéant d'autres monomères éthyléniquement insaturés, auquel cas la teneur totale de monomères éthyléniquement insaturés s'élève au maximum à 30 % en poids, par rapport au poids total de la composition de revêtement.

**6.** Composition de revêtement selon l'une quelconque des revendications 1 à 5, caractérisée en ce qu'en tant que composant B, on utilise au moins pour partie l'acrylate de $\beta$-carboxyéthyle de formule (I)

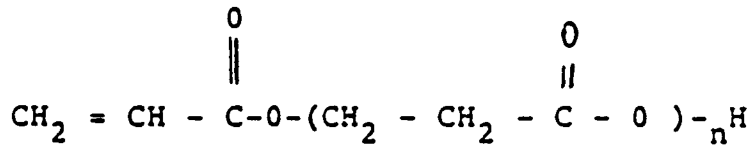 (I)

où n = 1 en moyenne.

**7.** Composition de revêtement selon l'une quelconque des revendications 1 à 6, caractérisée en ce qu'elle contient en outre au moins un composant synergétique et/ou des adjuvants et additifs usuels.

**8.** Procédé pour l'enduction d'une surface de verre, dans lequel

I) une composition de revêtement durcissable par rayonnement est appliquée et

II) la composition de revêtement est durcie au moyen d'un rayonnement UV ou de faisceaux d'électrons

caractérisé en ce qu'une composition de revêtement est appliquée selon l'une quelconque des revendications 1 à 7.

**9.** Procédé selon la revendication 8, caractérisé en ce que la surface de verre est la surface d'une fibre de verre optique.

**10.** Fibre de verre optique caractérisée en ce qu'elle est enduite d'une composition de revêtement selon l'une quelconque des revendications 1 à 7.

**11.** Utilisation de la fibre de verre selon la revendication 10 en tant que guide d'ondes lumineuses.

**12.** Utilisation de la composition de revêtement durcissable par rayonnement selon l'une quelconque des revendications 1 à 7 pour l'enduction de fibres de verre optiques.